# EUROPÄISCHE PATENTSCHRIFT

(11) **EP 2 441 156 B1**
(45) Veröffentlichungstag und Bekanntmachung des Hinweises auf die Patenterteilung: **24.10.2018**
(21) Anmeldenummer: 10724712.4
(22) Anmeldetag: 09.06.2010
(51) Int. Cl.: H02J 7/02, H02J 50/12, H02M 1/00

(54) **Schaltungsanordnung zur Induktiven Energieübertragung**
Circuit arrangement and method for inductive energy transfer
Dispositif et procédé de transmission d'énergie inductive

(30) Priorität: 10.06.2009 EP 09007667; 10.06.2009 EP 09007662
(43) Veröffentlichungstag der Anmeldung: 18.04.2012
(73) Patentinhaber: Braun GmbH, 61476 Kronberg/Taunus (DE)
(72) Erfinder: JUNG, Philipp, 64347 Griesheim (DE); LEPPER, Joachim, 61250 Usingen (DE); LANGSDORF, Jan Christian, 61440 Oberursel (DE); HOHMANN, Thomas, 63571 Gelnhausen (DE)
(86) Internationale Anmeldenummer: PCT/EP2010/003460
(87) Internationale Veröffentlichungsnummer: WO 2010/142433

(56) Entgegenhaltungen:
- DE-A1- 19 752 174
- DE-A1- 19 841 972
- GB-A- 2 094 574
- JP-A- 3 270 655
- JP-A- 6 054 454
- JP-A- 10 189 369

## Beschreibung

### Gebiet der Erfindung

Die Erfindung betrifft eine Schaltungsanordnung zur induktiven Energieübertragung für Elektrokleingeräte, beispielsweise für eine elektrische Zahnbürste oder für einen elektrischen Rasierapparat.

### Hintergrund der Erfindung

Akkubetriebene Elektrokleingeräte werden üblicherweise an einer externen Ladestation aufgeladen. Besonders beliebt sind kontaktlose Ladestationen, die elektrische Energie von der Ladestation in das Gerät induktiv übertragen. Dazu wird in der Ladestation durch einen Oszillator, der ein Spulenelement und ein Kondensatorelement aufweist, ein magnetisches Wechselfeld erzeugt, wobei das Spulenelement zugleich die Primärspule eines induktiven Übertragers bildet, und die Sekundärspule des Übertragers in dem zu ladenden Gerät angeordnet ist. Daher wird die Ladestation gewöhnlich als Primärseite, das zu ladende Gerät als Sekundärseite bezeichnet. Eine derartige Ladestation, bei der der Oszillator mit einer stabilisierten Spannung betrieben wird bzw. mit einer konstanten Amplitude schwingt, ist aus der JP 6-54454 A bekannt.

Moderne Ladestationen kennen üblicherweise drei Betriebszustände. Der erste Zustand ist der Betriebs-Modus, bei dem die Sekundärseite dauerhaft Energie nachfragt, beispielsweise zum Betreiben des Geräts oder zum Aufladen eines im Gerät eingebauten Akkumulators. Der zweite Zustand ist der einfache Standby-Modus, bei dem sich das Gerät nicht in der Ladestation befindet, also gar keine Energie nachgefragt wird. Der dritte Zustand ist der sogenannte erweiterte Standby-Modus, bei dem das Gerät sich in der Ladestation befindet aber nur gelegentlich Energie benötigt, beispielsweise weil der Akkumulator zwar vollständig geladen ist aber zur Kompensation der Selbstentladung oder des Eigenverbrauchs des Geräts gelegentlich nachgeladen werden muß. Im letztgenannten Fall soll die Ladestation je nach Bedarf zwischen dem einfachen Standby-Modus und dem Betriebs-Modus hin- und herschalten. Der jeweilige Betriebszustand der Ladestation (Primärseite) ist somit durch den Energiebedarf des Elektrokleingeräts (Sekundärseite) bestimmt.

Bekannt ist es, den Energiebedarf der Sekundärseite direkt an der Sekundärseite zu erfassen, eine entsprechende Information an die Primärseite zu übertragen und den Oszillator, d.h. beispielsweise die Basis-Emitter-Spannung eines im Oszillator arbeitenden Transistors, entsprechend einzustellen. Diese Lösung ist recht aufwendig, weil Übertragungsmittel für die Information von der Sekundärseite zur Primärseite benötigt werden. Alternativ könnte man den Energiebedarf der Sekundärseite dadurch ermitteln, daß die (primärseitige) Energieaufnahme des Oszillators gemessen und der Oszillator entsprechend gesteuert wird. Beide Varianten sind jedoch wenig geeignet zur Einstellung mehrerer Betriebszustände, weil wegen der üblicherweise schwachen Kopplung zwischen der Primär- und der Sekundärseite des Übertragers die Energieaufnahme der Ladestation durch die Energieaufnahme des Geräts nur wenig beeinflußt wird.

Bekannt ist es, dass eine Schaltungsanordnung dazu dient, dass sie das Aufheizen einer elektrischen Energieübertragungseinheit in einem unbelasteten Zustand verhindern soll. Eine solche Schaltungsanordnung kann einen Colpitts-Oszillator und einen FET zwischen dem Colpitts-Oszillator und Masse aufweisen, wobei die Gate-Spannung des FET erniedrigt wird, wenn ein unbelasteter Zustand festgestellt wird und damit wird der Ausgangspegel der Schaltungsanordnung verringert. JP 03-270655 beschreibt allgemein eine solche Schaltungsanordnung.

GB 2 094 574 beschreibt ein induktives Ladeteil, das eine Gleichrichterdiode und einen davor geschalteten komplexen Widerstand aufweist.

DE 198 41 972 A1 beschreibt einen getakteten Shuntregler für einen Netztransformator. Dieser weist eine Gleichrichterbrücke mit vorgeschaltetem, komplexem Widerstand auf. Bei Detektion einer Überspannung oberhalb einer Schwellspannung schaltet ein Schmitt-Trigger den Gleichrichter kurz. Ein Kondensator übernimmt dann die Spannungsversorgung.

JP 10-189369 beschreibt ein induktives Ladeteil, das primärseitig in Serie geschaltete Spulen aufweist, die aus zwei getrennten Spulenkörpern aufgebaut ist, wobei eine Oszillatorspule in einem Innenbereich der primärseitigen Übertragungsspule sitzt.

### Aufgabe der Erfindung

Aufgabe der vorliegenden Erfindung ist es, eine Schaltungsanordnung zur induktiven Energieübertragung von einer Primärseite zu einer Sekundärseite anzugeben, die den Energiebedarf der Sekundärseite auf einfache Weise primärseitig feststellen kann.

### Erfindungsgemäße Lösung

Diese Aufgabe wird gelöst durch Schaltungsanordnung zum induktiven Übertragen von Energie gemäß Anspruch 1.

Die Schaltungsanordnung weist einen Oszillator und eine Einrichtung zum Detektieren der Belastung des Oszillators und zum Versetzen der Schaltungsanordnung in einen von mehreren Betriebszuständen, einen Standby-Modus oder einen Betriebs-Modus, in Abhängigkeit von der detektierten Belastung auf, wobei die Einrichtung zum Auswerten einer elektrischen Größe im Oszillator ausgebildet ist. Der Oszillator ist vorzugsweise ein Colpitts- oder ein Hartley-Oszillator und weist in an sich bekannter Weise ein aktives Element auf. Die Einrichtung zum Detektieren der Belastung des Oszillators wertet eine elektrische Größe im Oszillator aus, vorzugsweise eine Spannung an einem Anschluß des aktiven Elements. Das aktive Element ist beispielsweise ein Transistor, der vorzugsweise in Basisschaltung betrieben wird. Die Einrichtung zum Detektieren der Belastung des Oszillators wertet vorzugsweise eine Spannung am Kollektor oder an der Basis des Transistors aus, beispielsweise eine Halbschwingung mit einer vorbestimmten Polarität. Vorzugsweise wird die Amplitude oder der Mittelwert der negativen Spannung am Kollektor oder an der Basis des Transistors ausgewertet. Die Amplitude der negativen Halbwelle der Oszillatorschwingung verändert sich nämlich besonders stark in Abhängigkeit von der sekundärseitigen Belastung. Die Belastung des Oszillators und damit der Leistungsbedarf der Sekundärseite kann somit primärseitig ermittelt werden anhand einer elektrischen Größe, die im Oszillator detektierbar ist. Die Einrichtung vergleicht die detektierte Belastung mit einem Referenzwert und stellt in Abhängigkeit vom Ergebnis des Vergleichs den Betriebszustand der Schaltungsanordnung ein durch Ansteuern eines steuerbaren Schalters, mit dem die Schaltungsanordnung von einem Standby-Modus in einen Betriebs-Modus umgeschaltet werden kann oder umgekehrt.

Die Umschaltung vom Standby-Modus in den Betriebs-Modus und umgekehrt erfolgt durch Umschalten der Versorgungsspannung des Oszillators durch den steuerbaren Schalter. Die Schaltungsanordnung weist ein Netzteil mit einem komplexen Eingangswiderstand auf, einem kapazitiven Vorwiderstand; so wird die Wirkleistungsaufnahme der Schaltungsanordnung dadurch verändert, daß mittels des steuerbaren Schalters der Ausgang des Netzteils mit einem vergleichsweise kleinen Widerstand abgeschlossen wird (Standby-Modus). Das Netz erfährt dann eine im wesentlichen kapazitive Blindlast, die durch den kapazitiven Vorwiderstand bestimmt ist.

Um die EU-Richtlinie 205/32 zu erfüllen, reicht es aus, wenn der Energieverbrauch der Schaltungsanordnung im Standby-Modus lediglich im zeitlichen Mittel geringer ist als im Betriebs-Modus. Demzufolge kann der Oszillator im Standby-Modus beispielsweise intermittierend arbeiten, d.h. nur zeitweise mit geringer Amplitude und sonst mit der im Betriebs-Modus üblichen größeren Amplitude schwingen.

Die beschriebenen Schaltungsanordnungen sind besonders für den Einsatz in induktiven Ladestationen für Elektrokleingeräte geeignet, beispielsweise für elektrische Zahnbürsten, elektrische Rasierapparate oder Kommunikationsgeräte (Mobiltelefone).

### Kurzbeschreibung der Figuren

Die Erfindung wird anhand von Ausführungsbeispielen erläutert, die in den Zeichnungen dargestellt sind. Weitere Varianten der Schaltungsanordnungen sind in der Beschreibung erwähnt. Es zeigt:
Fig. 1 ein Blockschaltbild einer Schaltungsanordnung zur induktiven Energieübertragung;
Fig. 2 eine erste Schaltungsanordnung mit einem Hartley-Oszillator;
Fig. 3 eine zweite Schaltungsanordnung mit einem Hartley-Oszillator;
Fig. 4 eine erste Schaltungsanordnung mit einem Colpitts-Oszillator;
Fig. 5 eine zweite Schaltungsanordnung mit einem Colpitts-Oszillator, welche nicht in den Schutzumfang der Ansprüche fällt;
Fig. 6 eine dritte Schaltungsanordnung mit einem Colpitts-Oszillator, welche nicht in den Schutzumfang der Ansprüche fällt.

### Ausführliche Beschreibung der Figuren

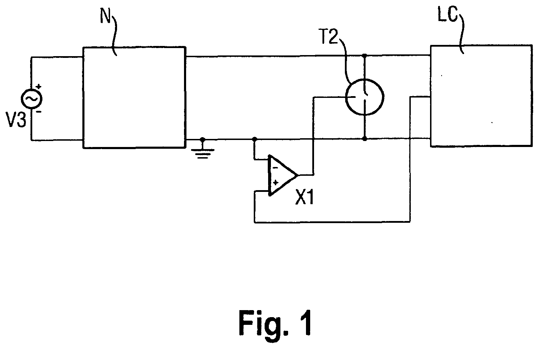

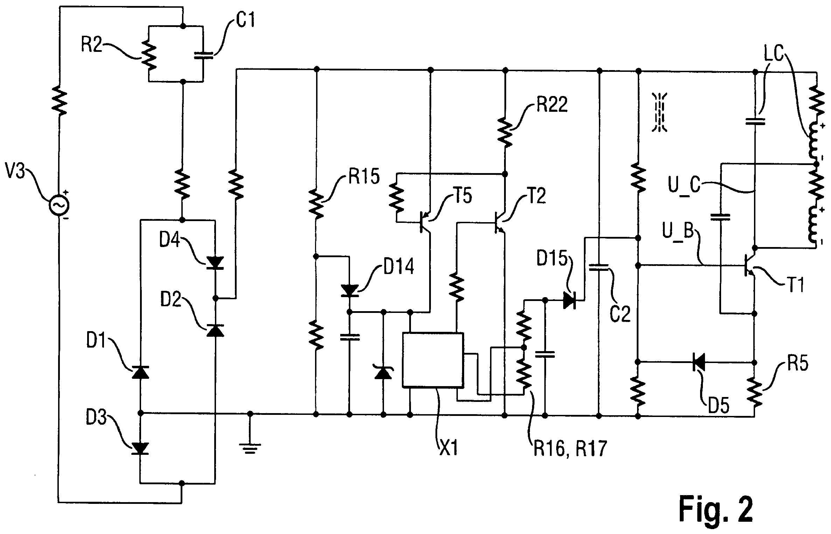

Das Blockschaltbild gemäß Fig. 1 zeigt eine Schaltungsanordnung mit einem Netzteil N und einem selbstschwingenden Oszillator LC, der der Erzeugung eines magnetischen Wechselfelds dient. Der Oszillator weist eine Spule auf, die der induktiven Übertragung von elektrischer Energie aus dem Oszillator LC (Primärseite) an einen in der Figur nicht dargestellten Verbraucher (Sekundärseite) dient, beispielsweise ein Elektrokleingerät, das zu diesem Zweck eine Empfangsspule enthält, die mit der Spule des Oszillators gekoppelt werden kann. Der Oszillator bezieht elektrische Energie aus dem Netz V3 über das Netzteil N, das einen komplexen Eingangswiderstand hat. Ferner weist die Schaltungsanordnung einen steuerbaren Schalter T2 und eine Einrichtung X1 zum Detektieren der Belastung des Oszillators LC auf, die den Schalter T2 steuert. Durch den steuerbaren Schalter T2 kann der komplexe Eingangswiderstand des Netzteils N umgeschaltet werden, sodaß die Schaltungsanordnung in einem Standby-Modus eine geringere Wirkleistung aus dem Netz V3 aufnimmt als in einem Betriebs-Modus. Der steuerbare Schalter T2 kann beispielsweise durch ein Relais oder einen Transistor realisiert sein, der elektrisch oder optisch ansteuerbar ist.
Bei der in Fig. 2 dargestellten Schaltungsanordnung enthält das Netzteil einen Kondensator C1 als kapazitiven Vorwiderstand und eine Gleichrichterbrücke mit Dioden D1, D2, D3, D4, die zusammen mit einem Kondensator C2 aus der Netzwechselspannung eine geglättete Gleichspannung erzeugt, mit der der Oszillator LC betrieben wird. Dem Kondensator C1 ist ein Widerstand R2 parallelgeschaltet, der dafür sorgt, daß der Kondensator C1 entladen wird, nachdem das Netzteil vom Netz V3 getrennt wurde. Der Widerstand R2 ist relativ hochohmig im Vergleich zum Wirkwiderstand des Kondensators C1, sodaß der komplexe Eingangswiderstand des Netzteils im Wesentlichen durch den kapazitiven Widerstand des Kondensators C1 bestimmt ist.

Soll die Schaltungsanordnung in den Standby-Modus versetzt werden, wird der kapazitive Vorwiderstand über die Gleichrichterbrücke und einen Transistor T2 und einen Widerstand R22 mit Masse verbunden. Dadurch wird die Leistungsaufnahme der Schaltungsanordnung aus dem Netz vom Wirkleistungsbereich in Richtung des Blindleistungsbereichs verschoben, und somit eine Reduzierung der Wirkleistungsaufnahme aus dem Netz erreicht. Ist der Transistor T2 vollständig durchgeschaltet, so wird der Strom im Wesentlichen durch den Widerstand R22 und den Kondensator C1 begrenzt. Wenn der Widerstandswert von R22 Null ist, wird der Oszillator von der Energiezufuhr vollständig abgeschnitten. Das Netz erfährt dann eine rein kapazitive Blindlast. Vorzugsweise ist jedoch der Widerstand R22 so dimensioniert, daß sich bei durchgeschaltetem Transistor T2 eine Spannung am Kondensator C2 einstellt, die zum Betrieb des Oszillators immer noch ausreicht, wobei dieser dann allerdings nur noch mit reduzierter Amplitude schwingt.

Die Schaltungsanordnung enthält als Oszillator LC einen Hartley-Oszillator in Basisschaltung, der als aktives Element einen Transistor T1 aufweist. Zur Erkennung der Belastung des Oszillators durch die Sekundärseite ist eine Einrichtung X1 vorgesehen, beispielsweise ein Mikrocontroller, sowie eine Diode D15 und ein Spannungsteiler, der durch die Widerstände R16 und R17 gebildet ist. Am einen Ende des Spannungsteilers R16, R17 liegt die negative Halbwelle der Basisspannung U_B des Transistors T1 an. Diese Spannung U_B wird über die Diode D15 herangeführt und repräsentiert die Belastung des Oszillators LC. Am anderen Ende des Spannungsteilers R16, R17 liegt eine positive Referenzspannung an, die vom Mikrocontroller X1 erzeugt wird. Die Spannung am Mittenabgriff des Spannungsteilers R16, R17 wird dem Mikrocontroller X1 zugeführt. Die negative Basisspannung U_B des Transistors T1 wird mittels des Spannungsteilers R16, R17 in den positiven Spannungsbereich transformiert, sodaß sie vom Mikrocontroller X1 mit einem Referenzwert verglichen werden kann. Abhängig vom Ergebnis dieses Vergleichs steuert der Mikrocontroller X1 den Transistor T2 an. Statt der negativen Halbwelle der Basisspannung kann auch die negative Halbwelle der Kollektorspannung U_C ausgewertet werden.

Der Mikrocontroller X1 wird über einen Spannungsteiler mit einem Widerstand R15, eine Diode D14 und einen Transistor T5 auch dann noch aus dem Netzteil mit Energie versorgt, wenn der Transistor T2 durchgeschaltet ist, und sich die Schaltungsanordnung im Standby-Modus befindet. Sobald er einen erhöhten Energiebedarf der Sekundärseite feststellt, wird er den Transistor T2 wieder sperren. Der Mikrocontroller X1 kann mit einem Steuerprogramm versehen sein, das den Transistor T2 beispielsweise gemäß einem vorgegebenen Zeitschema ein- und ausschaltet.

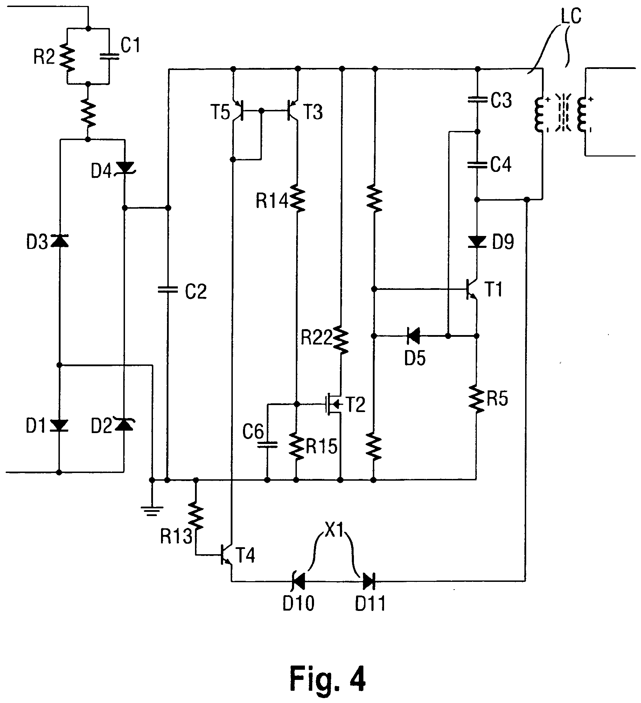

Eine andere Ausführung der oben beschriebenen Schaltungsanordnung verwendet statt des Hartley-Oszillators einen Colpitts-Oszillator, und/oder statt eines Mikrokontrollers diskrete Schaltungen zur Erkennung der Belastung des Oszillators und zum Verändern des komplexen Eingangswiderstands des Netzteils, wie sie beispielsweise in den Fig. 4 bis 6 dargestellt sind.

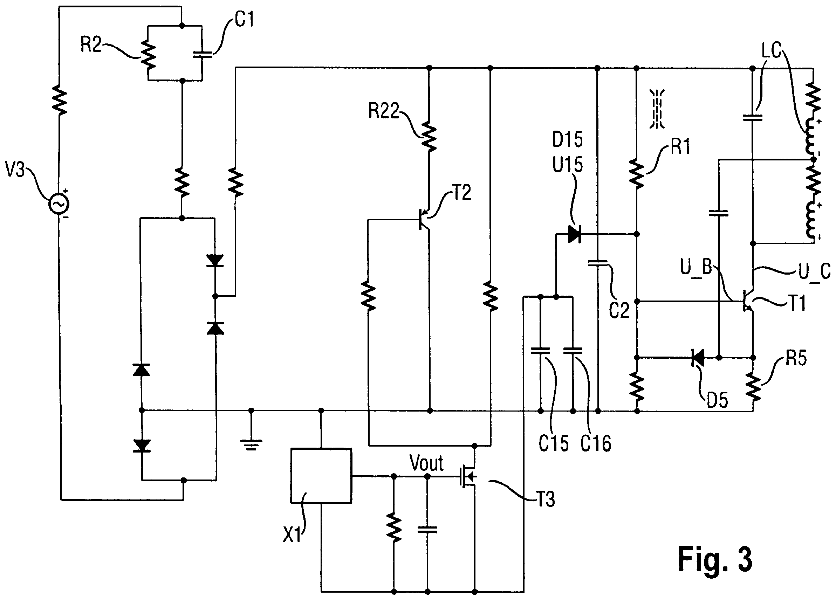

Fig. 3 zeigt eine Schaltungsanordnung mit einem Hartley-Oszillator, der durch ein Netzteil mit einem kapazitiven Vorwiderstand C1 versorgt wird. Als Einrichtung X1 zum Detektieren der Belastung des Oszillators ist ein sogenannter Reset-IC vorhanden. Der Reset-IC gibt an seinem Ausgang Vout nur dann einen hohen Pegel aus, wenn seine Versorgungsspannung einen vorbestimmten Wert überschreitet. Mit dem Reset-IC wird eine Schaltschwelle zum Durchschalten eines Feldeffekt-Transistors T3 eingestellt. Die Energiezufuhr vom Netzteil in den Oszillator wird durch Auswerten der Basisspannung des Transistors T1 eingestellt. Hierzu wird dem Reset-IC über die Diode D15 die negative Basisspannung des Transistors T1 zugeführt. Die Basis des Transistors T1 ist über dessen Emitterwiderstand R5 und die Diode D5 mit dem Schwingkreis gekoppelt.

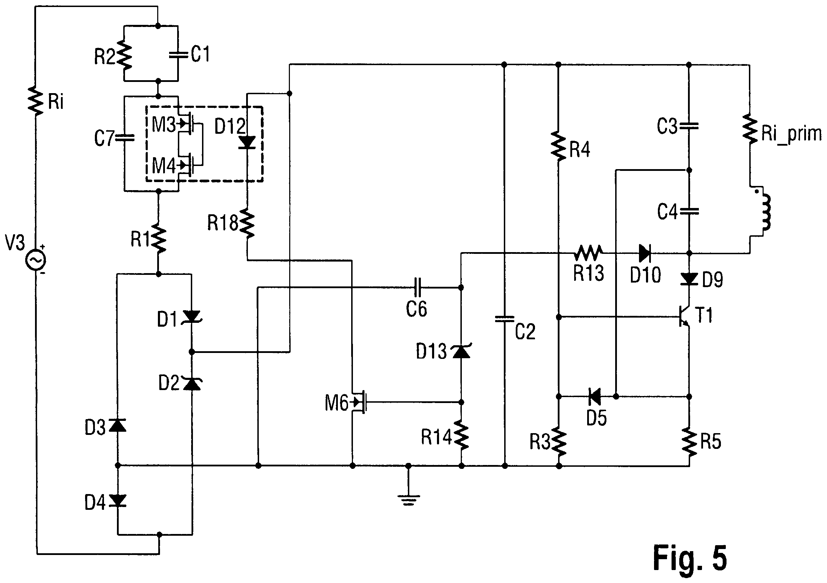

Steigt die induktive Belastung des Oszillators nimmt die Spannung an der Basis des Transistors T1 ab. Die Diode D15 läßt nur dann einen Stromfluß zu, wenn die Spannung U15 negativ ist, also die Basisspannung am Transistor T1 negativ gegen Masse ist. Der Reset-IC bezieht seine Versorgungsspannung über die Diode D15. Kondensatoren C15 und C16, die zwischen Masse und der Anode der Diode D15 angeordnet sind, stellen eine Zeitkonstante ein, mit welcher sich Änderungen der Basisspannung auf den Reset-IC auswirken. Der Reset-IC gibt an seinem Ausgang Vout nur dann einen hohen Pegel aus, wenn die negative Halbwelle der Basisspannung des Transistors T1 einen vorbestimmten Wert unterschreitet. Mit dem Pegel Vout wird der Feldeffekt-Transistor T3 angesteuert, welcher seinerseits den Transistor T2 durchschaltet. Unterschreitet die negative Basisspannung von T1 einen vorbestimmten Wert, so wird der Ausgang des Netzteils über den ohmschen Widerstand R22 mit einem vergleichsweise kleinen Widerstand überbrückt. Das Netzteil nimmt jetzt wegen des kapazitiven Vorwiderstands C1 fast nur noch Blindleistung aus dem Netz auf, und der Oszillator LC erhält nur noch wenig elektrische Energie aus dem Netzteil, und zwar so lange, bis die Spannung an den Kondensatoren C15 und C16 so weit abgeklungen ist, daß die Versorgungsspannung des Reset-IC wieder unter einen vorbestimmten Wert gefallen ist. Daher schwingt der Oszillator im Standby-Betrieb abwechselnd mit einer kleinen bzw. großen Amplitude.
Fig. 4 zeigt eine Schaltungsanordnung mit einem Colpitts-Oszillator, der durch ein Netzteil mit einem kapazitiven Vorwiderstand C1 versorgt wird. Die Einrichtung X1 zur Detektion der Belastung des Oszillators umfaßt eine Zener-Diode D10 und eine Diode D11, die die negative Spannungsamplitude der Schwingung im Oszillator LC detektiert, und zwar am Kollektor des Transistors T1. Im unbelasteten Zustand des Oszillators ist die negative Spannungsamplitude betragsmäßig maximal (Referenzwert). Ist die Amplitude kleiner als der Referenzwert, ist dies ein Zeichen für eine stärkere Dämpfung, also für einen höheren Energiebedarf. Im Fall des unbelasteten Oszillators, wird der Zweig mit der Zener-Diode D10 und der Diode D11 leitend, sodaß der Transistor T4 durchschaltet. Die Transistoren T3 und T5 können dann ebenfalls durchschalten, wenn deren Basis-Emitter-Spannungen betragsmäßig einen vorbestimmten Wert überschreiten. Die beiden Transistoren T3 und T5 steuern den Feldeffekt-Transistor T2. Wenn T2 durchschaltet, wird der Ausgang des Netzteils über den ohmschen Widerstand R22, der einen vorbestimmten relativ kleinen Wert hat, gegen Masse geschlossen, sodaß die Versorgungsspannung des Oszillators LC abnimmt, und er kaum mehr Energie aus dem Netzteil entnimmt. Wegen des kapazitiven Vorwiderstands C1, der im Vergleich zum ohmschen Widerstand R22 einen großen Wert aufweist, wird das Netz jetzt praktisch nur noch mit Blindleistung belastet (Standby-Betrieb).
Die Diode D9 am Kollektor des Transistors T1 unterbindet einen möglichen Stromrückfluß in Sperrichtung des Transistors T1, der zu Lasten des Diodenzweigs D10, D11 gehen würde, unterstützt also die Auswertbarkeit der negativen Spannungsamplitude im Oszillator LC.
Bei der in Fig. 5 dargestellten, nicht zur beanspruchten Erfindung gehörenden Schaltungsanordnung enthält das Netzteil einen komplexen Eingangswiderstand, dessen kapazitiver Anteil in Abhängigkeit von der Belastung des Oszillators verändert werden kann. Das Netzteil enthält einen kapazitiven Vorwiderstand und eine Gleichrichterbrücke mit Dioden D1, D2, D3, D4, die zusammen mit einem Kondensator C2 aus der Netzwechselspannung eine geglättete Gleichspannung erzeugt, mit der der Oszillator betrieben wird. Der kapazitive Vorwiderstand weist einen Kondensator C7 und einen Kondensator C1 auf, dem ein Widerstand R2 parallelgeschaltet ist, der dafür sorgt, daß der Kondensator C1 entladen wird, nachdem das Netzteil N vom Netz V3 getrennt wurde. Dem Kondensator C7 ist ein elektronischer Schalter parallelgeschaltet, der aus zwei hintereinandergeschalteten Transistoren M3, M4 besteht und Teil eines Optokopplers ist. Die Parallelschaltung aus dem Kondensator C1 und dem Widerstand R2 ist in Reihe mit der Parallelschaltung aus dem Kondensator C7 und den Transistoren M3, M4 geschaltet. Der Widerstand R2 ist relativ hochohmig im Vergleich zum Wirkwiderstand des Kondensators C1. Der komplexe Eingangswiderstand des Netzteils N ist im Wesentlichen durch den kapazitiven Widerstand des Kondensators C1 bestimmt ist, wenn der elektronische Schalter geschlossen ist, bzw. durch den kapazitiven Widerstand der beiden hintereinandergeschalteten Kondensatoren C1 und C7, wenn der elektronische Schalter geöffnet ist.

Soll die Schaltungsanordnung in den Standby-Modus versetzt werden, wird der elektronische Schalter geöffnet, d.h. die Diode D12 des Optokopplers ausgeschaltet. Dadurch wird die Wirkleistungsaufnahme der Schaltungsanordnung aus dem Netz verkleinert, weil der Wirkwiderstand der beiden hintereinandergeschalteten Kondensatoren C1, C7 wesentlich größer ist als der Wirkwiderstand des Kondensators C1. Das Netzteil nimmt jetzt fast nur noch Blindleistung auf. Vorzugsweise sind die Kondensatoren C1, C7 so dimensioniert, daß sich im Standby-Modus eine Spannung am Kondensator C2 einstellt, die zum Betrieb des Oszillators immer noch ausreicht, wobei dieser dann allerdings nur noch mit reduzierter Amplitude schwingt.

Die Schaltungsanordnung enthält als Oszillator einen Colpitts-Oszillator in Basisschaltung, der als aktives Element einen Transistor T1 aufweist. Zur Erkennung der Belastung des Oszillators durch die Sekundärseite ist eine Schaltung vorgesehen, die zwei Dioden D10, D13, zwei Widerstände R13, R14, einen Kondensator C6 und einen Schalttransistor M6 aufweist. Die Kathode der Diode D10 ist mit dem Kollektor des Transistors T1 verbunden. An der Anode der Diode D10 tritt die negative Halbwelle der Kollektorspannung U_C des Transistors T1 auf. Diese Spannung ist repräsentativ für die Belastung des Oszillators LC. Statt der negativen Halbwelle der Kollektorspannung kann auch die negative Halbwelle der Basisspannung U_B ausgewertet werden. Die Anode der Diode D10 ist über den Widerstand R13 mit dem einen Ende des Kondensators C6 und der Kathode der Diode D13 verbunden. Das andere Ende des Kondensators C6 ist mit Masse verbunden. Die Anode der Diode D13 ist mit dem Steueranschluß des Schalttransistors M6 und über den Widerstand R14 mit Masse verbunden. Die Schaltstrecke des Schalttransistors M6 ist in Reihe mit der Diode D12 des Optokopplers und mindestens einem Strombegrenzungswiderstand R18 geschaltet.

Der Schalttransistor M6 ist nur dann gesperrt, wenn an seinem Steueranschluß eine hinreichend große negative Spannung anliegt. Bei geringer Belastung des Oszillators wird über die Dioden D10 und D13 und den Widerstand R13 eine hinreichend große negative Spannung dem Steueranschluß des Schalttransistors M6 zugeführt, was zur Folge hat, daß die Diode D12 des Optokopplers ausgeschaltet ist, die Transistoren M3, M4 des elektronischen Schalters gesperrt sind, und der komplexe Eingangswiderstand einen großen Wert annimmt.

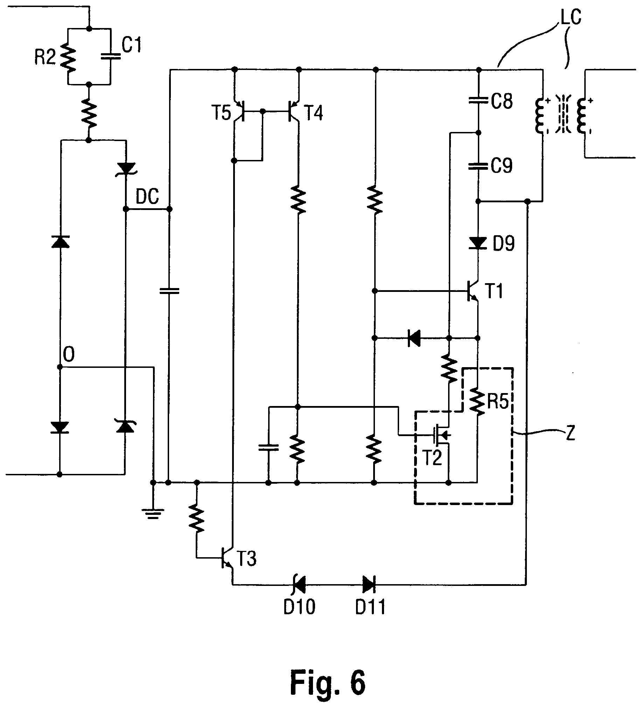

Eine andere Ausführung der oben beschriebenen Schaltungsanordnung verwendet zum Verändern des komplexen Eingangswiderstands des Netzteils statt des Optokopplers und Kondensators C7 eine Reihenschaltung aus einem Transistor T2 und einem Widerstand R22 parallel zum Kondensator C2, wie sie in Fig. 2 dargestellt ist, oder einen umschaltbaren Emitterwiderstand im Oszillator, wie er in Fig. 6 dargestellt ist.

Fig. 6 zeigt eine weitere, nicht zu der beanspruchten Erfindung gehörende Schaltungsanordnung mit einem Colpitts-Oszillator in Basisschaltung, die dafür ausgelegt ist, die negative Spannungsamplitude der Schwingung im Oszillator LC zu detektieren. Wenn die negative Spannungsamplitude betragsmäßig einen vorbestimmten Wert übersteigt, also im Fall des unbelasteten Oszillators LC, wird ein Zweig mit einer Zener-Diode D10 und einer Diode D11 leitend, und ein Transistor T3 schaltet durch. Die Transistoren T4 und T5 können dann ebenfalls durchschalten, wenn deren Basis-Emitter-Spannungen betragsmäßig einen vorbestimmten Wert überschreiten. Die beiden Transistoren T4 und T5 steuern einen Feldeffekt-Transistor T2, dessen Schaltstrecke parallel zu einem Emitterwiderstand R5 geschaltet ist. Wenn T2 durchschaltet, wird der Wirkwiderstand Z am Emitter des Transistors T1 verhältnismäßig klein, sodaß die Energiezufuhr im Oszillator LC maximal wird. Der kapazitive Vorwiderstand C1 des Netzteils ist jedoch nicht für eine derartig große Leistung ausgelegt, sodaß sich die Ausgangsspannung des Netzteils und damit auch die Wirkleistungsaufnahme der Schaltungsanordnung verringert, weil der Ausgang des Netzteils jetzt mit einem vergleichsweise kleinen Widerstand abgeschlossen ist.

Nimmt die negative Spannungsamplitude betragsmäßig im Vergleich zu einem Referenzwert, der durch die Zener-Diode D10 bestimmt ist, ab, ist dies ein Zeichen für eine stärkere Dämpfung, also für einen höheren sekundärseitigen Energiebedarf. Der Transistor T2 sperrt und der Wirkwiderstand Z am Emitter wird vergleichsweise groß. Dies ist der Betriebs-Zustand der Schaltungsanordnung, in dem die Leistungsaufnahme des Oszillators auf den kapazitiven Vorwiderstand C1 des Netzteils abgestimmt ist, und maximale Leistung an die Sekundärseite übertragen wird.

Eine Diode D9 am Kollektor des Transistors T1 unterbindet einen möglichen Stromrückfluß in Sperrichtung des Transistors T1, der zu Lasten des Diodenzweigs D10, D11 gehen würde, unterstützt also die Auswertbarkeit der negativen Spannungsamplitude im Oszillator LC.

## Patentansprüche

1. Schaltungsanordnung zum induktiven Übertragen von Energie mit einem Oszillator (LC), und mit einer Einrichtung (X1) zum Detektieren der Belastung des Oszillators und zum Versetzen der Schaltungsanordnung in einen von mehreren Betriebszuständen in Abhängigkeit von der detektierten Belastung, wobei die Einrichtung (X1) die Belastung des Oszillators (LC) anhand einer im Oszillator (LC) auftretenden elektrischen Größe (U_B; U_C) ermittelt, wobei die Einrichtung (X1) ein Vergleichsmittel aufweist, das die detektierte Belastung mit einem Referenzwert vergleicht, und die Einrichtung (X1) in Abhängigkeit vom Ergebnis des Vergleichs erforderlichenfalls einen steuerbaren Schalter (T2) ansteuert, der die Schaltungsanordnung von einem Betriebs-Modus in einen Standby-Modus umschaltet, **dadurch gekennzeichnet, dass** die Schaltungsanordnung ein Netzteil mit einem komplexen Eingangswiderstand mit einem ersten Kondensator (C1) als kapazitiven Vorwiderstand und einer Gleichrichterbrücke (D1, D2, D3, D4) aufweist, die zusammen mit einem zu einem Ausgang des Netzteils parallel geschalteten zweiten Kondensator (C2) eine geglättete Gleichspannung an dem Ausgang des Netzteils erzeugt, wobei der steuerbare Schalter (T2) beim Umschalten in den Standby-Modus den Ausgang des Netzteils über einen vergleichsweise kleinen ohmschen Widerstand (R22) gegen Masse schließt und dadurch die Versorgungsspannung des Oszillators verringert, sowie die Leistungsaufnahme der Schaltungsanordnung vom Wirkleistungsbereich in Richtung des Blindleistungsbereichs verschoben und somit der komplexe Eingangswiderstand des Netzteils durch den steuerbaren Schalter (T2) verändert wird, wobei die dem Netz entnommene Blindleistung durch den ersten Kondensator (C1) bestimmt wird.

2. Schaltungsanordnung nach Anspruch 1, **dadurch gekennzeichnet, dass** der Oszillator im Standby-Modus intermittierend arbeitet.

3. Schaltungsanordnung nach Anspruch 1 oder 2, **dadurch gekennzeichnet, dass** der ohmsche Widerstand so dimensioniert ist, dass sich bei durchgeschaltetem steuerbarem Schalter eine Spannung an dem zweiten Kondensator (C2) einstellt, die zum Betrieb des Oszillators noch immer ausreicht, wobei dieser dann allerdings nur noch mit reduzierter Amplitude schwingt.

4. Schaltungsanordnung nach Anspruch 1, 2 oder 3, **dadurch gekennzeichnet, daß** der Oszillator (LC) ein Colpitts- oder ein Hartley-Oszillator ist und ein aktives Element (T1) aufweist.

5. Schaltungsanordnung nach Anspruch 4, **dadurch gekennzeichnet, daß** die Einrichtung (X1) als elektrische Größe (U_B; U_C) eine Spannung an einem Anschluß des aktiven Elements (T1) auswertet.

6. Schaltungsanordnung nach Anspruch 4 oder 5, **dadurch gekennzeichnet, daß** das aktive Element (T1) ein Transistor ist, der in Basisschaltung betrieben wird, und daß die elektrische Größe (U_B; U_C) eine Spannung am Kollektor oder an der Basis des Transistors ist.

7. Schaltungsanordnung nach Anspruch 6, **dadurch gekennzeichnet, daß** die Einrichtung (X1) die Amplitude oder den Mittelwert der negativen Spannung am Kollektor oder an der Basis des Transistors auswertet.

8. Schaltungsanordnung nach einem der vorhergehenden Ansprüche, **dadurch gekennzeichnet, daß** das Vergleichsmittel durch einen Mikrokontroller realisiert ist.

9. Schaltungsanordnung nach einem der vorhergehenden Ansprüche, **dadurch gekennzeichnet, daß** das Vergleichsmittel durch eine Zenerdiode (D10; D13) realisiert ist.

10. Schaltungsanordnung nach einem der vorhergehenden Ansprüche, **dadurch gekennzeichnet, daß** das Vergleichsmittel durch einen Reset-IC realisiert ist.

11. Schaltungsanordnung nach einem der Ansprüche 4 - 7, bzw. 8 - 10 sofern sie von einem der Ansprüche 4 - 7 abhängig sind, **dadurch gekennzeichnet, daß** eine Diode (D9) zwischen einem Schwingkreis des Oszillators (LC) und dem aktiven Element (T1) vorgesehen ist.

## Claims

1. Circuit arrangement for the inductive transmission of energy, having an oscillator (LC), and having a device (X1) for detecting the load of the oscillator and for putting the circuit arrangement into one of several operating states as a function of the detected load, wherein the device (X1) determines the load of the oscillator (LC) on the basis of an electrical quantity (U_B; U_C) that occurs in the oscillator (LC), wherein the device (X1) has a comparator that compares the detected load to a reference value, and the device (X1), as a function of the result of the comparison, if necessary, controls a controllable switch (T2) that switches the circuit arrangement from an operating mode into a stand-by mode, **characterized in that** the circuit arrangement has a power supply with a complex input resistance with a first capacitor (C1) as a capacitive pre-resistance and a rectifier bridge (D1, D2, D3, D4), which, together with a second capacitor (C2) connected in parallel to an output of the power supply, produces a smoothed direct voltage at the output of the power supply, wherein the controllable switch (T2) at switch-over to stand-by mode closes the output of the power supply to ground via a relatively small ohmic resistance (R22) and thereby reduces the supply voltage of the oscillator, and also shifts the power consumption of the circuit arrangement from the effective power range in the direction of the reactive power range, and in this way the complex input resistance of the power supply is changed by controllable switch (T2), wherein the reactive power drawn from the network is determined by the first capacitor (C1).

2. Circuit arrangement according to claim 1, **characterized in that** the oscillator in stand-by mode works intermittently.

3. Circuit arrangement according to claim 1 or 2, **characterized in that** the ohmic resistor is dimensioned such that, in the case of a connected controllable switch, a voltage is set at the second capacitor (C2) which still suffices to operate the oscillator, wherein this then, however, oscillates only with reduced amplitude.

4. Circuit arrangement according to claim 1, 2, or 3, **characterized in that** the oscillator (LC) is a Colpitts or a Hartley oscillator, and has an active element (T1).

5. Circuit arrangement according to claim 4, **characterized in that** the device (X1) evaluates, as an electrical quantity (U_B; U_C), a voltage at a terminal of the active element (T1).

6. Circuit arrangement according to claim 4 or 5, **characterized in that** the active element (T1) is a transistor that is operated in a common-base circuit, and that the electrical quantity (U_B; U_C) is a voltage at the collector or at the base of the transistor.

7. Circuit arrangement according to claim 6, **characterized in that** the device (X1) evaluates the amplitude or the mean value of the negative voltage at the collector or at the base of the transistor.

8. Circuit arrangement according to one of the preceding claims, **characterized in that** the comparator is realized by a microcontroller.

9. Circuit arrangement according to one of the preceding claims, **characterized in that** the comparator is realized by a Zener diode (D10; D13).

10. Circuit arrangement according to one of the preceding claims, **characterized in that** the comparator is realized by a reset IC.

11. Circuit arrangement according to one of claims 4 through 7, or 8 through 10, provided these are dependent upon one of claims 4 through 7, **characterized in that** a diode (D9) is provided between an oscillating circuit of the oscillator (LC) and the active element (T1).

## Revendications

1. Ensemble circuit pour le transfert d'énergie par induction, comprenant un oscillateur (LC) et un dispositif (X1) pour détecter la sollicitation de l'oscillateur et pour faire passer l'ensemble circuit dans l'un de nombreux modes de fonctionnement en fonction de la sollicitation détectée, dans lequel le dispositif (X1) détermine la sollicitation de l'oscillateur (LC) sur la base d'une grandeur électrique (U_B ; U_C) intervenant dans l'oscillateur (LC), dans lequel le dispositif (X1) présente un moyen de comparaison, qui compare la sollicitation détectée à une valeur de référence et le dispositif (X1), en fonction du résultat de la comparaison, le cas échéant, commande un commutateur pouvant être commandé (T2), qui bascule l'ensemble circuit d'un mode de fonctionnement vers un mode de veille, **caractérisé en ce que** l'ensemble circuit présente un bloc d'alimentation comprenant une résistance d'entrée complexe avec un premier condensateur (C1) en guise de résistance série capacitive et un pont redresseur (D1, D2, D3, D4), qui produit, conjointement avec un deuxième condensateur (C2) branché en parallèle à une sortie du bloc d'alimentation, une tension continue lissée au niveau de la sortie du bloc d'alimentation, dans lequel le commutateur pouvant être commandé (T2), lors du passage en mode veille, ferme vers la masse la sortie du bloc d'alimentation par le biais d'une résistance ohmique comparativement faible (R22) et, ainsi, réduit la tension d'alimentation de l'oscillateur et la puissance absorbée de l'ensemble circuit est décalée de la plage de puissance active en direction de la plage de puissance réactive et, ainsi, la résistance d'entrée complexe du bloc d'alimentation est modifiée par le commutateur pouvant être commandé (T2), dans lequel la puissance réactive extraite du réseau est déterminée par le premier condensateur (C1).

2. Ensemble circuit selon la revendication 1, **caractérisé en ce que** l'oscillateur fonctionne de façon intermittente en mode veille.

3. Ensemble circuit selon la revendication 1 ou 2, **caractérisé en ce que** la résistance ohmique est dimensionnée de sorte que, lorsque le commutateur pouvant être commandé est dans l'état transmetteur, une tension soit définie sur le deuxième condensateur (C2), qui suffit toujours pour le fonctionnement de l'oscillateur, dans lequel celle-ci oscille cependant uniquement avec une amplitude réduite.

4. Ensemble circuit selon la revendication 1, 2 ou 3, **caractérisé en ce que** l'oscillateur (LC) est un oscillateur Colpitts ou Hartley et présente un élément actif (T1).

5. Ensemble circuit selon la revendication 4, **caractérisé en ce que** le dispositif (X1) évalue, en guise de grandeur électrique (U_B ; U_C), une tension à une borne de l'élément actif (T1).

6. Ensemble circuit selon la revendication 4 ou 5, **caractérisé en ce que** l'élément actif (T1) est un transistor, qui est actionné dans une configuration à base commune et **en ce que** la grandeur électrique (U_B ; U_C) est une tension au niveau du collecteur ou de la base du transistor.

7. Ensemble circuit selon la revendication 6, **caractérisé en ce que** le dispositif (X1) évalue l'amplitude ou la valeur médiane de la tension négative au niveau d collecteur ou de la base du transistor.

8. Ensemble circuit selon une des revendications précédentes, **caractérisé en ce que** le moyen de comparaison est réalisé par le biais d'un microcontrôleur.

9. Ensemble circuit selon une des revendications précédentes, **caractérisé en ce que** le moyen de comparaison est réalisé par le biais d'une diode de Zener (D10 ; D13).

10. Ensemble circuit selon une des revendications précédentes, **caractérisé en ce que** le moyen de comparaison est réalisé par le biais d'un IC de réinitialisation.

11. Ensemble circuit selon une des revendications 4 - 7 ou 8 - 10 dans la mesure où elles dépendent de l'une des revendications 4 - 7, **caractérisé en ce qu'**une diode (D9) est prévue entre un circuit oscillant de l'oscillateur (LC) et l'élément actif (T1).
